# EUROPEAN PATENT APPLICATION

(11) **EP 3 168 505 A1**
(43) Date of publication of application: **17.05.2017**
(21) Application number: 16198131.1
(22) Date of filing: 10.11.2016
(51) Int. Cl.: F16J 9/14

(54) **A TOP PISTON RING FOR A LARGE TWO-STROKE TURBO-CHARGED COMPRESSION IGNITED INTERNAL COMBUSTION ENGINE WITH CROSSHEADS**

(30) Priority: 12.11.2015 DK 201570737
(71) Applicant: MAN Diesel & Turbo, filial af MAN Diesel & Turbo SE, Tyskland, 2450 Copenhagen SV (DK)
(72) Inventor: Fogh, Jesper Weis, 2000 Frederiksberg (DK); Soleil, Ayhan Günes, 21845 Vintrie/Malmö (SE)
(74) Representative: Nordic Patent Service A/S

(57) **Abstract**

A top piston ring (4) for use in a piston ring pack in a groove (3) in a piston (1) of a large two-stroke turbo charged uniflow-scavenged internal combustion engine with crossheads. The top piston ring (4) comprises a ring body with an upper ring face (16), a lower ring face (17), an outer ring face (11), an inner ring face (12) and first- and second engaging end portions (8,9) at a ring partition. The first engaging end portion (8) comprises a circumferentially extending finger (23), the second engaging end portion (9) comprises a circumferentially extending recess (28) shaped and sized for sealingly and slidably receiving the finger (23). The finger (23) is provided with a radially projecting tongue (51) that extends circumferentially over at least a portion of the circumferential extent of the finger (23). The recess (28) is provided with a groove (52) that extends circumferentially over at least a portion of the circumferential extent of the recess (28). The tongue (51) and groove (52) are complementary in shape in the radial and axial direction and the groove (52) receives at least a portion of the circumferential extent of the tongue (51).

It is suggested that Fig. 7 is published with the abstract.

## Description

### FIELD OF THE INVENTION

The present invention relates to a top piston ring for a large two-stroke turbo-charged uniflow-scavenged internal combustion engine with crossheads, in particular a top piston ring that is provided with a ring partition with engaging end portions to form a gas tight ring.

### BACKGROUND ART

Large two-stroke turbo-charged uniflow-scavenged engines with crossheads are typically used in propulsion systems of marine vessels or as prime mover in power plants. Typically, these engines are operated with heavy fuel oil or other inexpensive combustible product, or with gas.

The engine pistons are provided with a ring pack that seals against the combustion pressure in order to prevent combustion gases penetrating the scavenge space. In addition, the piston rings ensure the lubricating film is evenly distributed. The piston rings in the ring pack seal a piston oscillating at a mean piston speed of approximately 10 m/sec for an compressed air and combustion gasses at a pressure of around 250 bar pressure and a mean gas temperature of around 1800 °K and using only a few drops of oil as lubrication, and all with an expected service life of many thousand hours. Therefore the main requirements for piston rings are high resistance to wear and corrosion and a low drop in elasticity at high temperatures.

Due to the aggressive nature of the combustion gases created when operating with heavy fuel oil, the inner walls of the cylinder liners are lubricated with a special cylinder lubrication oil that protects the inner walls of the cylinder liners from the aggressive components of the combustion gases. The provision of the cylinder lubrication and the size of the components involved, like pistons with diameter between 25 cm and 108 cm are the reason for the ring pack of a large two-stroke turbo-charge unit flow-scavenged engine to be different from ring pack in smaller four-stroke diesel engines.

The ring pack of a large two-stroke turbo-charged uniflow-scavenged engine with crossheads typically includes three or four piston rings with the top piston ring being a CPR ring, i.e. the top piston ring or the groove in the piston is provided with pressure relief grooves that allow for a well-defined and control flow of hot gas from the combustion chamber to the underside of the top piston ring thereby reducing the pressure drop over the top ring and distributing the load over several rings in the ring pack.

WO02070926 discloses a top piston ring that is provided with a ring partition. The ring partition is formed from engaging end portions on the ring body. One end portion is provided with a finger flush with the outer face and with the lower face of the top piston ring. The other end portion is provided with a recess opening to the outer face and to the lower face of the top piston ring. The finger slidingly engages the recess but the result is not gas tight, giving combustion gas free passage to the backside space between piston groove and piston ring. This flow of combustion gas is concentrated in the partition area, thereby heating up the finger. The finger is coolest at the contact face touching the cylinder liner. The resulting temperature gradient causes the finger to deform and cause hard contact between the tip of the finger and the cylinder liner. Excessive wear and failure of the finger can result, and may cause failure of the top piston ring.

This known piston ring gives rise to following disadvantages. During the engine cycle the inter ring pressure between the first ring and the second ring will rise above the cylinder pressure, causing the top ring to lift. As long as the pressure above the first ring is higher than the pressure below the first ring, the first ring will rest at the floor of the first ring groove. Once the pressure below the first ring is highest, the first ring will move and rest at the ceiling in ring the first groove. As the ring ends are not locked together in axial direction the ring gap may not lift simultaneously. Small differences in pressure around the lock exists due to a non-symmetric design of the lock. As the pressure determines the lift one ring end tends to lift before the other. This is critical as this uneven lift creates a gas passage through the lock. Such gas passages is harmful for the ring as the thermal load increases and leads to unwanted thermal deformation of the ring lock leading to further poor sealing around the lock. Further, due to the pressures a twisting moment is created a on the piston ring. This leads to an angular opening at the back joint of the lock. This passage will create a high thermal input to the lock. Again this leads to thermal overheating of the lock, and the result is poor sealing ability.

US 2009/0051117 discloses a piston ring with engaging end portions, one end portion defining a circumferentially extending finger and the other end portion defining a matching recess for receiving the finger. The finger is provided with a radially directed tongue that is received in a groove that opens to the recess. The groove is open in the radial direction, i.e. the groove opens to the inner ring surface. This known piston ring is not gastight in the radial direction since there will be a gap between the radially extending bottom of the groove and the radially extending tip of the tongue when the engaging end portions are not completely pressed together and the engaging end portions are in use never completely pressed together.

### DISCLOSURE OF THE INVENTION

On this background, it is an object of the present application to provide a top piston ring that overcomes or at least reduces the problems indicated above.

This object is achieved in accordance with a first aspect by providing a top piston for use in a piston ring pack together with a plurality of lower piston rings in respective annular ring grooves in the side wall of a piston of a large two-stroke compression ignited internal combustion engine with crossheads to seal against the pressure in the combustion chamber above the piston, the top piston ring comprising a ring body with an upper ring face, a lower ring face, an outer ring face, an inner ring face and first- and second engaging end portions at a ring partition that allows expansion and contraction of the top piston ring, the first engaging end portion comprising a circumferentially extending finger, the second engaging end portion comprising n circumferentially extending recess shaped and sized for sealingly and slidably receiving the finger, the finger being provided with a radially projecting tongue that extends circumferentially over at least a portion of the circumferential extent of the finger, the recess being provided with a groove that extends circumferentially over at least a portion of the circumferential extent of the recess with a radial depth (D), the tongue and groove are complementary in shape in the radial and axial direction and the groove receives at least a portion of the circumferential extent of the tongue.

By providing a tongue- and groove construction in a top piston ring with an engaging end part including a circumferentially extending finger and another cooperating engaging end part including a recesses for receiving the finger that provides for a positive mechanical engagement (interlock) in the axial direction of the engaging end parts, it becomes possible to construct a top piston ring that is both gas tight and mechanically stable.

In a first possible implementation form of the first aspect the radial height of the tongue is slightly less than the radial depth of the groove.

In a second possible implementation form of the first aspect the tongue and the groove are configured for slideable engagement that allows relative movement between the end parts in the circumferential direction and prevents relative movement between the end parts in axial direction.

In a third possible implementation form of the first aspect the tongue and the recess are curved and both have the same radius of curvature that corresponds to the curvature of the piston ring.

In a fourth possible implementation form of the first aspect the circumferential extent of the recess is divided in a proximal portion and a distal portion with the proximal portion closest to the ring body, the circumferential extent of the finger being divided in a proximal portion and a distal portion with the proximal portion closest to the ring body, the proximal portion of the recess opening to the outer ring face and to the lower ring face, the distal portion of the recess opening to the outer ring face, to the lower ring face and to the upper ring face, the proximal portion of the finger being flush with the outer ring face and with the lower ring face, at least a radially outer portion of the proximal portion of the finger being flush with the upper ring face, and the distal portion of the finger being flush with the outer ring face and with the lower ring face.

In a fifth possible implementation form of the first aspect the proximal part of the finger is provided with a vertical wall that has a face flush with the outer face and with a face flush with the upper ring face.

In a sixth possible implementation form of the first aspect the second engaging end portion is provided with a recess for receiving the vertical wall.

In a seventh possible implementation form of the first aspect recess is defined by a lower horizontal wall and a first horizontal wall and a second horizontal wall, the second horizontal wall extending completely to the outer face in the proximal portion of the recess and the vertical wall extending only partially to the outer face in the distal portion of the recess in order to create a recess in which the vertical wall is at least partially received.

In an eighth possible implementation form of the first aspect the recess opens to the inner face and to the outer face.

In a ninth possible implementation form of the first aspect the main ring body is non-circular so that the pressure between and the cylinder liner and the outer face of the top piston ring in the area of the partition is lower than on the remaining circumference of the top piston ring.

In a tenth possible implementation form of the first aspect the top ring is a temper-hardened casting.

In a eleventh possible implementation form of the first aspect the top piston rings is coated with a thermal spray coating or with a galvanic coating.

In a twelfth possible implementation form of the first aspect the top piston ring is provided with at least two controlled leakage grooves for allowing a controlled flow of gas from the combustion chamber to the to the underside of the top piston ring.

In a thirteenth possible implementation form of the first aspect the proximal portion of the recess opens only to the outer ring face and to the lower ring face.

In a fourteenth possible implementation form of the first aspect the distal portion of the finger being flush only with the outer ring face and with the lower ring face.

In a fifteenth possible implementation form said radially projecting tongue is a radially inwardly projecting tongue.

In a sixteenth possible implementation form said radially projecting tongue is a radially outwardly projecting tongue.

Further objects, features, advantages and properties of the engine and method according to the present disclosure will become apparent from the detailed description.

### BRIEF DESCRIPTION OF THE DRAWINGS

In the following detailed portion of the present description, the invention will be explained in more detail with reference to the exemplary embodiments shown in the drawings, in which:
Fig. 1 is a section through a segment of a piston fitted in a cylinder liner showing a ring pack with four piston rings,
Fig. 2 on a larger scale, is a section of a piston fitted in a cylinder liner, showing a ring pack with five piston rings,
Fig. 3 is a plane view of a piston top ring in a loaded condition,
Fig. 4 is a side view of the top piston ring of Fig. 3,
Figs. 5 and 6 show a side view and a top view, respectively, of a segment of the ring of Fig. 3 in the area around a pressure relief groove,
Figs. 7 and 8 are elevated views of the second engaging end portion,
Figs. 9 and 10 are elevated views of the first engaging end portion, and
Fig. 11 is a sectional view through the top piston ring in an area where the first- and second engaging end portions overlap.

### DETAILED DESCRIPTION OF PREFERRED EMBODIMENTS

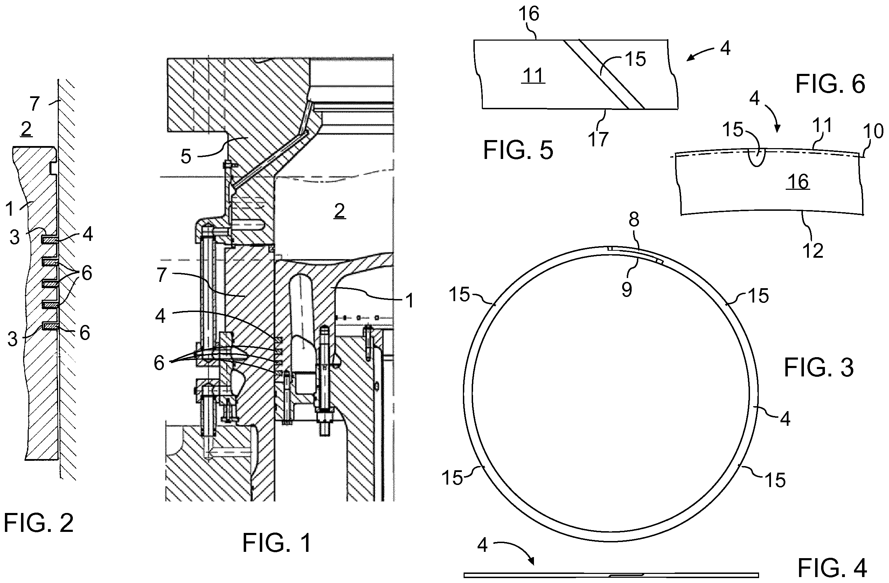

Figs. 1 and 2 show a piston 1, the cylindrical side wall of which is provided with several ring grooves 3, of which the top groove 3 receives a piston top ring 4 and the lower piston rings 6 have been inserted in the lower grooves 3. The top piston ring 4 and the lower piston rings 6 of a single piston 1 form a so-called ring pack of cooperating piston rings 4,6. The piston 1 is of a large two-stroke turbo-charged uniflow-scavenged compression ignited internal combustion engine with crossheads and the piston 1 defines together with the cylinder liner 7 and the cylinder cover 5 a combustion chamber 2 (it is noted that Fig. 1 does not show an exhaust valve in the cylinder cover 5 but it is understood that an exhaust valve will be present in the central opening in the cylinder cover 5).

The piston rings 4,6 prevent the gas pressure in the combustion chamber 2 from penetrating to the space below the piston 1.

Figs. 3 and 4 illustrate an example embodiment of a top piston ring 4 with a partition which substantially prevents gas flow through the partition. The piston top ring 4 has ring body with an upper ring face 16, a lower ring face 17, an outer ring face 11, an inner ring face 12 and first- and second engaging end portions 8,9 at a ring partition that allows expansion and contraction of the top piston ring 4. Thus, the partition renders it possible partly to expand the ring diameter during the installation of the top piston ring 4 in the ring groove 3, and partly to permit a first- and second engaging end portion 8,9 of the top piston ring 4 to withdraw from each other as the top piston ring 4 gets worn during use 8 (the radially outer surface 11 that runs on the liner surface is provided with a wear-layer L (Fig. 12) that will be gradually worn down during use.

As shown in Figs. 5 and 6, the radially outer side 11 of the top piston ring 4 has in an embodiment four pressure relief grooves 15, which extend obliquely at an angle in relation to the plane of the top piston ring 4. The pressure relief grooves 15 ensure a controlled gas flow from the top side to the lower side of the piston top ring 4, and thus a uniform and suitably delimited gas flow through the individual grooves 15.

The outer rim of the ring groove 3 is indicated by dashed line 10. An outer face 11 of the top piston ring 4 is in contact with a cylinder liner not shown in Figs. 5 and 6.

In another embodiment, the top piston ring 4 is not provided with pressure relief grooves and the pressure relief function is e.g. provided by grooves in the piston (not shown). It is also possible to operate the top piston ring 4 without controlled leakage, i.e. a gas tight top piston ring 4 that handles substantially the complete pressure difference over the piston 1.

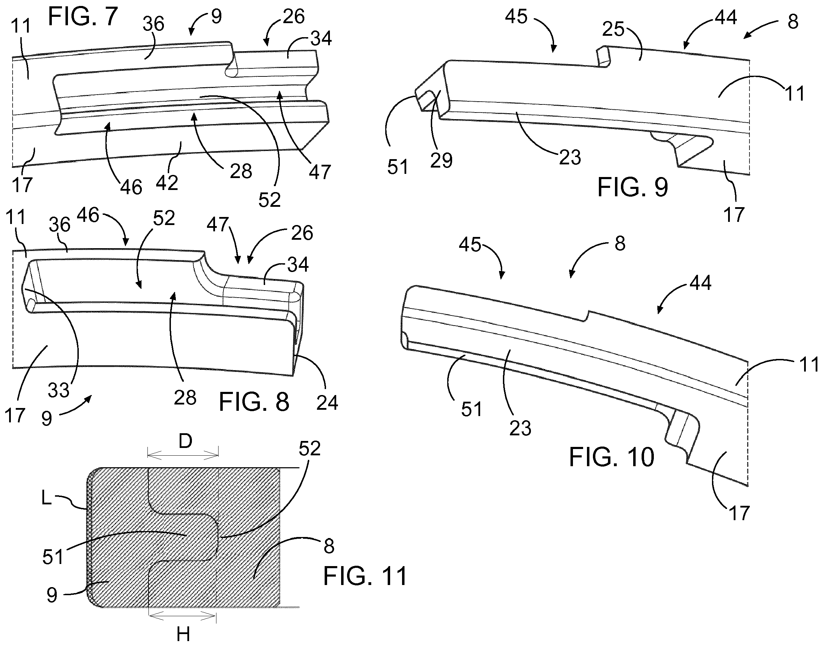

As shown in Figs. 7 to 11, the first end portion 8 of the top piston ring 4 has a circumferentially extending finger 23 projecting into a substantially corresponding circumferentially extending recess 28 at the second end portion 9 of the top piston ring 4. The circumferentially extending recess 28 is shaped and sized for sealingly and circumferentially slidably receiving the finger 23 and the recess 28 and the finger 23 have complementary cross-sectional shapes.

In the radial direction, the finger 23 is smaller than the top piston ring 4, and the recess 28 is delimited at the inner side of the top piston ring 4 by a lower horizontal wall 42 abutting the inner side of the finger 23. The lower horizontal wall 42 adjoins a circumferentially extending groove 52 that forms a (radially) deepening of the recess 28.

The axial height of the finger 23 is smaller than the ring height, and the recess 28 is in its proximal portion 46 upwardly delimited by a horizontal wall 36, the lower side of which abuts the upper side of the finger 23.

The recess 28 is extended by a recess 26 in the circumferentially distal portion 47 of the second engaging end portion. The recess 26 opens to the top face 16 and to the outer face 11 and connects to the recess 28. Thereby, the distal portion 47 of the recess 28 opens to the outer ring face 11, to the lower ring face 17 and to the upper ring face 16. A horizontal wall 34 projects from the lower horizontal wall 42 up to the recess 26 in the circumferentially distal portion 47 of the recess 28. The first horizontal wall 34 reinforces and stabilizes the distal portion of the second engaging end portion 9. Thus, the recess 28 is defined by a lower horizontal wall 42 and a first horizontal wall 34 and a second horizontal wall 36. The second horizontal wall 36 extends completely to the outer face 11 in the proximal portion 46 of the recess 28 whilst the horizontal wall 34 extends only partially to the outer face 11 in the distal portion 47 of the recess 28 into order to create a recess 26 in which the vertical wall 25 is at least partially received.

The proximal portion 44 of the finger 23 has an axial height that is at least in an outer part of the radial extent of the proximal portion 44 of the finger 23 equal to ring height, thereby rendering the proximal potion 44 of the finger 23 flush with the outer ring face 11, with the lower ring face 17 and at least partially with the upper ring face 16, thereby forming an upright wall 25. The upright wall 25 forms an additional finger that fills out the recess 26 in the directions of width and height, thereby forming an additional barrier to the gas flow through the partition. In particular, a flow through the partition to the inner side of the top piston ring 4 is prevented by the overlap between the vertical wall 25 and the first horizontal wall 34 created by recess 26 and abutting with the radially inner face of the upright wall 25.

The distal portion 45 of the finger 23 is flush substantially only with the outer ring face 11 and with the lower ring face 17. The distal portion 45 of the finger 23 thus has a height that is less than the height of the ring body and a width that is less than that of the ring body. The inner wall and the upper wall of the distal portion of the finger 23 sealingly and slidably engage/abut in the horizontal wall 36 and the lower horizontal wall 42 of the second engaging and portion 9.

The finger 23 is provided with a radially inwardly directed and lengthwise circumferentially extending tongue 51 that is shaped an sized to fit in the circumferentially extending groove 52 with the circumferentially extending tongue 51 being received circumferentially slidably in the circumferentially extending groove 52. The cross-sectional shape of the finger 23 is generally complementary with the cross-sectional shape of the recess 28 with the cross-sectional shape of the tongue 51 being complementary with the cross-sectional shape of the groove 52. Thus, as shown in e.g. Fig. 11, the finger 23 and recess 28 including their tongue 51 and groove 52 have complementary profiles. The tongue 51 and the recess 52 are curved and both have the same radius of curvature that corresponds to the curvature of the top piston ring 4. In another example embodiment (not shown) the placement of the finger the recess is reversed and the tongue is therefore radially projecting outwardly.

Preferably, the (radial) height H of tongue 51 fills out substantially or nearly substantially the complete (radial) depth D of the groove 52. Thus, the (radial) depth D of the groove 52 is preferably slightly larger than the (radial) height H of the tongue 51.

The amount of circumferential overlap between the finger 23 and the recess 28 is variable. During use the wear-layer L on the radially outer surface 11 and the running surface of the cylinder liner 7 slowly wear down, which leads to decrease of the circumferential overlap between the finger 23 and the recess 28. This applies equally to the circumferential overlap between the tongue 51 and the grove 52.

The tongue 51 and groove 52 arrangement ensures a gas tight seal through a labyrinth type arrangement and the engagement between the tongue 51 and the groove 52 provides for a mechanical connection i.e. a mechanical interlock in both the axial directions (opposing axial directions) and thus ensures that the first end portion 8 and the second end portion 9 are mechanically secured to one another in both axial directions.

In the shown embodiment the circumferentially extending groove 52 extends circumferentially over the proximal part 46 and the distal part 47, i.e. over the complete circumferential extent of the end portion 9, but this is not necessary and in embodiments the circumferentially extending groove 52 can have a circumferential extent less than that of the end portion 9, but in this case the circumferential extent of the tongue 51 will be correspondingly shorter as well.

As the finger 23 with its tongue 51 fills out the recess 28 including the groove 52 in the directions of width and height, the combustion gases are substantially prevented from flowing through the cut to the space below the piston 1, regardless whether or not the end face 29 of the finger 23 is circumferentially spaced from the end face 33 of the recess 28.

The circumferential extent of the recess 28 is divided in a proximal portion 46 and a distal portion 47 with the proximal portion 46 closest to the ring body.

The circumferential extent of the finger 23 is divided in a proximal 44 portion and a distal portion 45 with the proximal portion 44 closest to the ring body.

The proximal portion 46 of the recess 28 opens substantially only to the outer ring face 11 and to the lower ring face 17. The proximal portion 46 of the recess 28 is delimited by lower horizontal wall 42 and by the second horizontal wall 36. In the circumferential direction of the recess 28 is delimited by the end wall 33.

Typically, all piston rings 4,6 in a pack are manufactured to be non-circular. This non-circular form is required so that the piston ring exerts an exactly defined pressure over the whole ring circumference when inserted in the circular cylinder liner 7. This pressure can in principle be distributed evenly over the circumference; however, a negative oval form is generally aimed for in a top piston ring 4 for use a piston 1 of a large two-stroke turbo charged uniflow-scavenged internal combustion engine. This means that the pressure in the area of the partition is lower than on the remaining circumference which avoids increased pressure on the partition during operation of the engine.

In an embodiment the top piston ring 4 is a temper-hardened casting with inclusions of vermicular graphite for use in the first groove, while in the lower grooves, piston rings of a non-hardened alloyed casting with lamellar graphite.

In an embodiment the top piston rings 4 is coated with a thermal spray coatings or with a galvanic coating. In an embodiment the top piston ring 4 has an asymmetric convex running surface (outer face) profile.

In an embodiment a ring pack comprises:
- a top ring: asymmetrically barreled, twin layer coated, side face chromium coated,
- a 2^{nd} ring asymmetrically barreled, running-in coated, side face chromium coated,
- a 3^{rd} ring asymmetrically barreled, running-in coated, and
- a 4^{th} ring asymmetrically barreled, twin layer coated.

In another embodiment a ring pack comprises:
- a top ring: asymmetrically barreled, side face chrome ceramic coated,
- lower rings: asymmetrically barreled, chrome ceramic coated.

The term "comprising" as used in the claims does not exclude other elements or steps. The term "a" or "an" as used in the claims does not exclude a plurality. The single processor or other unit may fulfill the functions of several means recited in the claims.

The reference signs used in the claims shall not be construed as limiting the scope.

Although the present invention has been described in detail for purpose of illustration, it is understood that such detail is solely for that purpose, and variations can be made therein by those skilled in the art without departing from the scope of the invention.

## Claims

1. A top piston ring (4) for use in a piston ring pack together with a plurality of lower piston rings (6) in respective annular ring grooves (3) in the side wall of a piston (1) of a large two-stroke turbo charged compression ignited internal combustion engine with crossheads to seal against the pressure in a combustion chamber (2) above said piston (1), said top piston ring (4) comprising:
a ring body with an upper ring face (16), a lower ring face (17), an outer ring face (11), an inner ring face (12) and first- and second engaging end portions (8,9) at a ring partition that allows expansion and contraction of said top piston ring (4),
said first engaging end portion (8) comprising a circumferentially extending finger (23),
said second engaging end portion (9) comprising a circumferentially extending recess (28) shaped and sized for sealingly and slidably receiving said finger (23),
said finger (23) being provided with a radially projecting tongue (51) that extends circumferentially over at least a portion of the circumferential extent of said finger (23),
**characterized in that**
said recess (28) is provided with a groove (52) that extends circumferentially over at least a portion of the circumferential extent of said recess (28) with a radial depth (D),
said tongue (51) and groove (52) are complementary in shape in the radial and axial direction and said groove (52) is configured to receive at least a portion of the circumferential extent of said tongue (51).

2. The top piston ring (4) according to claim 1, wherein the radial height (H) of said tongue (51) is slightly less than the radial depth (D) of said groove (52).

3. The top piston ring (4) according to claim 1 or 2, wherein said tongue (51) and said groove (51) are configured for slideable engagement that allows relative movement between the first and second end portions (8,9) in the circumferential direction and prevents relative movement between the first and second end portions (8,9) in axial direction.

4. The top piston ring according to any one of claims 1 to 3, wherein said tongue (51) and said recess (52) are curved and both have the same radius of curvature that corresponds to the curvature of said top piston ring (4).

5. The top piston ring according to any one of claims 1 to 4, wherein the circumferential extent of said recess (28) is divided in a proximal portion (46) and a distal portion (47) with the proximal portion (46) closest to said ring body, the circumferential extent of said finger (23) being divided in a proximal portion (44) and a distal portion (45) with the proximal portion closest to said ring body, the proximal portion (46) of said recess opening to said outer ring face (11) and to said lower ring face (17), the distal portion (47) of said recess opening to said outer ring face (11), to said lower ring face (17) and to said upper ring face (16), the proximal portion (44) of said finger (23) being flush with said outer ring face (11) and with said lower ring face (17), at least a radially outer portion of said proximal portion of said finger (23) being flush with said upper ring face (16), and the distal portion (45) of said finger (23) being flush with said outer ring face (11) and with said lower ring face (17).

6. A top piston ring according to claim 5, wherein said proximal portion of said finger (23) is provided with a vertical wall (25) that has a face flush with said outer face (11) and with a face flush with said upper ring face (16).

7. A top piston ring according to claim 6, wherein said second engaging end portion (9) is provided with a recess (26) for receiving said vertical wall (25).

8. A top piston ring according to claim 6 or 7, wherein said recess (28) is defined by a lower horizontal wall (42) and a first horizontal wall (34) and a second horizontal wall (36), said second horizontal wall (36) extending completely to the outer face (11) in the proximal portion (46) of the recess (28) and said vertical wall (34) extending only partially to the outer face (11) in the distal portion (47) of the recess (28) in order to create a further recess (26) adapted to, at least partially, receive said vertical wall (25).

9. A top piston ring (4) according to claim 8, wherein said further recess (26) opens to said inner face (16) and to said outer face (11).

10. A top piston ring (4) according to any one of claims 1 to 9, wherein said main ring body is non-circular so that the pressure between and the cylinder liner and the outer face of the top piston ring in the area of the partition is lower than on the remaining circumference of the top piston ring (4).

11. A top piston ring (4) according to any one of claims 1 to 10, wherein said proximal portion (46) of said recess opens only to said outer ring face (11) and to said lower ring face (17).

12. A top piston ring (4) according to any one of claims 1 to 11, wherein the distal portion (45) of said finger (23) being flush only with said outer ring face (11) and with said lower ring face (17).
